# EUROPEAN PATENT APPLICATION

(11) **EP 4 686 909 A1**
(43) Date of publication of application: **04.02.2026**
(21) Application number: 25187429.3
(22) Date of filing: 04.07.2025
(51) Int. Cl.: G01B 11/24, B60C 11/24, B60C 25/00, G01B 11/245, G01M 17/02, G01N 21/88, G06T 7/00

(54) **INSPECTION DEVICE, INSPECTION METHOD, AND PROGRAM**

(30) Priority: 30.07.2024 JP 2024123548
(71) Applicant: NEC Corporation, 108-8001 Tokyo (JP)
(72) Inventor: INOUE, Keiko, Tokyo, 108-8001 (JP); YACHIDA, Shoji, Tokyo, 108-8001 (JP); YAMAGUCHI, Masahiro, Tokyo, 108-8001 (JP)
(74) Representative: Betten & Resch

(57) **Abstract**

An inspection device includes a shape recognition means for recognizing a shape of a tire from one or more images of the tire and detecting a defect candidate of the tire; and a tire information recognition means for extracting a character from the one or more images of the tire and recognizing tire information including a model number of the tire; a reference dimension setting means for acquiring information about a specification dimension of the tire based on the recognized model number of the tire; a dimension calculation means for calculating a dimension of the defect candidate based on the specification dimension of the tire and the shape of the tire; and a determination means for determining presence or absence of a defect of the tire based on the dimension of the defect candidate.

## Description

This application is based upon and claims the benefit of priority from Japanese Patent Application No. 2024-123548, filed on July 30, 2024, the disclosure of which is incorporated herein in its entirety by reference.

### TECHNICAL FIELD

The present disclosure relates to an inspection device, an inspection method, and a program.

### BACKGROUND ART

One method of inspecting the appearance of a tire is a method using an optical cutting method.

For example, a surface shape measurement device described in JP 2023-131124 A irradiates a measurement surface of an object to be measured such as a tire with strip-shaped light or line shaped light, and a rotary table rotates the object to be measured to sequentially capture an optical cutting line by the strip-shaped light or the line shaped light moving on the measurement surface. The surface shape measurement device generates an image indicating the surface shape of the measurement surface by sequentially disposing the plurality of pieces of optical cutting line image data according to the related rotation angle.

### SUMMARY

In a case where the appearance of the tire is inspected using the optical cutting method, it is necessary to capture an image by irradiating each portion of the tire with strip-shaped light or line shaped light, and it is considered that time is required for the inspection. When the appearance of the tire can be inspected without having to irradiate the tire with the strip-shaped light or the line shaped light, the time required for the inspection is expected to be relatively short.

An example of an object of the present disclosure is to provide an inspection device, an inspection method, and a program that can solve the above-described problems.

According to a first aspect of the present disclosure, an inspection device includes a shape recognition means for recognizing a shape of a tire from one or more images of the tire and detecting a defect candidate of the tire, and a tire information recognition means for extracting a character from the one or more images of the tire and recognizing tire information including a model number of the tire, a reference dimension setting means for acquiring information about a specification dimension of the tire based on the recognized model number of the tire, a dimension calculation means for calculating a dimension of the defect candidate based on the specification dimension of the tire and the shape of the tire, and a determination means for determining presence or absence of a defect of the tire based on the dimension of the defect candidate.

According to a second aspect of the present disclosure, an inspection method includes recognizing a shape of a tire from one or more images of the tire and detecting a defect candidate of the tire, and extracting a character from the one or more images of the tire and recognizing tire information including a model number of the tire, acquiring information about a specification dimension of the tire based on the recognized model number of the tire, calculating a dimension of the defect candidate based on the specification dimension of the tire and the shape of the tire, and determining presence or absence of a defect of the tire based on the dimension of the defect candidate.

According to a third aspect of the present disclosure, a program causes a computer to execute a process of recognizing a shape of a tire from one or more images of the tire and detecting a defect candidate of the tire, and extracting a character from the one or more images of the tire and recognizing tire information including a model number of the tire, acquiring information about a specification dimension of the tire based on the recognized model number of the tire, calculating a dimension of the defect candidate based on the specification dimension of the tire and the shape of the tire, and determining presence or absence of a defect of the tire based on the dimension of the defect candidate.

According to an aspect of the present disclosure, it is possible to inspect the appearance of a tire without having to irradiate the tire with strip-shaped light or line shaped light.

### BRIEF DESCRIPTION OF THE DRAWINGS

Fig. 1 is a diagram illustrating an example of a configuration of an inspection device according to at least one example embodiment;
Fig. 2 is a diagram illustrating an example of arrangement of cameras according to at least one example embodiment;
Fig. 3 is a diagram illustrating an example of arrangement of cameras according to at least one example embodiment;
Fig. 4 is a view illustrating an example of a procedure of processing in which the inspection device according to at least one example embodiment inspects a tire;
Fig. 5 is a diagram illustrating an example of a configuration of an inspection device according to at least one example embodiment;
Fig. 6 is a diagram illustrating an example of a procedure of processing in the inspection method according to at least one example embodiment; and
Fig. 7 is a diagram illustrating an example of a configuration of a computer according to at least one example embodiment.

### EXAMPLE EMBODIMENT

While example embodiments of the present disclosure will be described hereinafter, the following example embodiments do not limit the invention according to the claims. Not all combinations of features described in the example embodiments are essential to the solution of the invention.

### <First example embodiment>

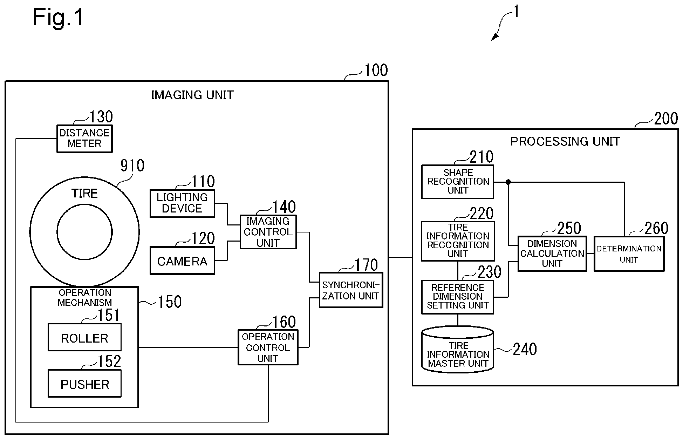

Fig. 1 is a diagram illustrating an example of a configuration of an inspection device according to at least one example embodiment. In the configuration illustrated in Fig. 1, an inspection device 1 includes an imaging unit 100 and a processing unit 200.

The imaging unit 100 includes a lighting device 110, a camera 120, a distance meter 130, an imaging control unit 140, an operation mechanism 150, an operation control unit 160, and a synchronization unit 170. The operation mechanism 150 includes a roller 151 and a pusher 152.

The processing unit 200 includes a shape recognition unit 210, a tire information recognition unit 220, a reference dimension setting unit 230, a tire information master unit 240, a dimension calculation unit 250, and a determination unit 260.

Fig. 1 illustrates a tire 910 to be inspected. The tire 910 may be configured outside the inspection device 1.

The lighting device 110 irradiates the tire with light (illumination light) for imaging the tire.

The lighting device 110 corresponds to an example of a lighting means.

The camera 120 images a tire.

The distance meter 130 measures a distance between the distance meter 130 itself and the tire 910. The distance measured by the distance meter 130 is used for calculating the outer diameter of the tire 910. The outer diameter of the tire 910 is used for calculating the rotation amount of the roller 151 that rotates the tire 910.

The imaging control unit 140 controls radiation of light by the lighting device 110 and imaging of the tire 910 by the camera 120.

For example, the imaging control unit 140 may switch the illumination pattern by the lighting device 110 for each portion of the tire 910 and irradiate the portion with light from various directions. The imaging control unit 140 may cause the camera 120 to perform imaging for each illumination pattern.

It is assumed that the radiation direction of light to the tire 910 is different for each illumination pattern by the lighting device 110. For example, the lighting device 110 may include a plurality of light sources, and the light source to be turned on may be changed for each illumination pattern. Since the lighting device 110 irradiates the tire 910 with light from the light source at a position different for each illumination pattern, the radiation direction of light is different for each illumination pattern.

It is expected that the processing unit 200 can recognize the shape of the tire 910 in more detail by the camera 120 imaging the tire 910 in each of the plurality of radiation directions of light. For example, when the camera 120 images a portion of the tire 910 in each of three or more radiation directions of light, the processing unit 200 can recognize the shape of the tire 910 using a photometric stereo method.

The operation mechanism 150 operates the tire 910.

The roller 151 rotates the tire 910 in such a way that the camera 120 can image each portion of the tire 910.

The roller 151 corresponds to an example of a rotation means.

The pusher 152 pushes out the tire 910 from the inner face. Accordingly, in a case where there is a crack in the tire, it is expected that the crack can be easily detected.

The operation control unit 160 causes the operation mechanism 150 to operate the tire 910.

Specifically, the operation control unit 160 calculates the outer diameter of the tire 910 based on the distance measured by the distance meter 130, and calculates the rotation amount of the roller 151 for making one rotation (one turn) of the tire 910 based on the calculated outer diameter. The operation control unit 160 rotates the roller 151 by a predetermined rotation amount every time the camera 120 images the tire 910. The operation control unit 160 repeats the rotation of the tire 910 by the rotation of the rollers 151 until the tire 910 makes one rotation. As a result, the camera 120 can capture an image of the entire circumference of the tire 910 without omission.

The operation control unit 160 controls the pusher 152 in such a way that the pusher 152 pushes out the tire 910 from the inner face while the pusher 152 presses the tire 910 against the roller.

The synchronization unit 170 synchronizes the imaging of the tire 910 by the camera 120 with the operation of the tire 910 by the operation mechanism 150.

Specifically, the synchronization unit 170 instructs the imaging control unit 140 to image the tire 910 by the camera 120. When the imaging of a portion of the tire 910 by the camera 120 is completed, the synchronization unit 170 instructs the operation control unit 160 to rotate the tire 910. The synchronization unit 170 repeats an instruction to image the tire 910 and an instruction to rotate the tire 910 until imaging of the entire circumference of the tire 910 is completed.

The shape recognition unit 210 recognizes the shape of the tire 910 using the one or more images captured by the camera 120.

The shape recognition unit 210 corresponds to an example of a shape recognition means.

Hereinafter, a case where the shape recognition unit 210 recognizes the shape of the tire 910 using the photometric stereo method will be described as an example. However, the method by which the shape recognition unit 210 recognizes the shape of the tire 910 is not limited to a specific method.

The tire information recognition unit 220 reads information about the tire 910 from the one or more images captured by the camera 120. Specifically, the tire information recognition unit 220 extracts character information from the image of the side face of the tire 910, and reads the tire information including the model number of the tire 910. The tire information is information related to the tire 910.

The tire information recognition unit 220 corresponds to an example of a tire information recognition means.

The method by which the tire information recognition unit 220 reads a character from an image is not limited to a specific method. The tire information recognition unit 220 may read a character from the image using a known character recognition algorithm.

The tire information master unit 240 stores the tire information in advance (before the inspection device 1 starts the inspection). Specifically, the tire information master unit 240 stores tire information in which a model number of a tire is associated with a reference dimension of the tire. The reference dimension here is a dimension defined as a specification.

The reference dimension setting unit 230 acquires information about the reference dimension of the tire 910 based on the model number of the tire 910 recognized by the tire information recognition unit 220. Specifically, the reference dimension setting unit 230 acquires information about the reference dimension associated with the model number of the tire 910 from the tire information master unit 240.

The reference dimension setting unit 230 corresponds to an example of a reference dimension setting means.

The dimension calculation unit 250 calculates the absolute dimension of the tire 910 based on the shape of the tire 910 recognized by the shape recognition unit 210 and the reference dimension of the tire 910 acquired by the reference dimension setting unit 230. Specifically, the dimension calculation unit 250 calculates a dimension of the defect candidate of the tire 910 (absolute dimension of the defect candidate of the tire 910).

The absolute dimension here is an actual dimension (actual dimension) of the tire 910.

The dimension calculation unit 250 corresponds to an example of a dimension calculation means.

For example, the shape recognition unit 210 may generate one or more images in which the contrast of the groove (groove on the tread face) is enhanced using a photometric stereo method. The dimension calculation unit 250 may calculate how many pixels the groove corresponds to, and calculate how many millimeters one pixel corresponds to based on information about the dimension of the groove indicated by the reference dimension.

The dimension calculation unit 250 can convert the number of pixels in the image of the tire 910 into an absolute dimension of the tire 910 based on the calculated length per pixel.

However, the method by which the dimension calculation unit 250 calculates the absolute dimension of the tire 910 is not limited to a specific method.

The determination unit 260 determines the presence or absence of a defect of the tire 910 based on the tire information about the tire 910 recognized by the tire information recognition unit 220, the shape of the tire 910 recognized by the shape recognition unit 210, and the dimension of the tire 910 calculated by the dimension calculation unit 250.

The determination unit 260 corresponds to an example of a determination means.

For example, in a case where the shape recognition unit 210 detects a defect candidate such as a crack in the recognized shape of the tire 910, the dimension calculation unit 250 calculates an absolute dimension of the defect candidate. The determination unit 260 compares the absolute dimension of the defect candidate with a threshold value set for each type of defect. In a case where the absolute dimension of the defect candidate is equal to or more than the threshold value, the determination unit 260 determines that the defect candidate corresponds to the defect. In a case where the magnitude of the error between the absolute dimension of the tire 910 calculated by the dimension calculation unit 250 and the reference dimension of the tire 910 acquired by the reference dimension setting unit 230 is equal to or more than a predetermined threshold value, the determination unit 260 determines that there is a defect in the tire 910.

The type of the defect detected by the determination unit 260 is not limited to a specific type. For example, the determination unit 260 may detect tread wear (shortage of the depth of the groove due to wear of the tread portion), a cut flaw (cut), a crack (cracking), a through flaw (nail hole or the like), waving, curling, exposure of an internal cord (metal cord or nylon cord inside the tire), and a puncture repair mark, or part thereof, but is not limited thereto.

The information about the reference dimension of the tire 910 may be used when the shape recognition unit 210 detects a defect candidate. For example, the information about the reference dimension of the tire 910 may include information about a groove (tread pattern) of the tire 910 in the specification. The shape recognition unit 210 may distinguish a cut flaw or a crack from a groove by referring to the information about the groove of the tire 910. As a result, it is expected that the shape recognition unit 210 can detect a defect candidate with higher accuracy.

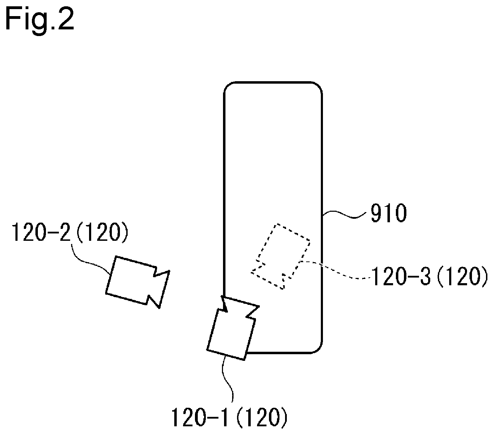

Fig. 2 is a diagram illustrating an example of arrangement of the camera 120. Fig. 2 illustrates an example of the arrangement of the camera 120 when viewing the tread face of the tire 910.

In the example of Fig. 2, the inspection device 1 includes three cameras 120. In a case where the three cameras 120 are distinguished, they are also referred to as cameras 120-1, 120-2, and 120-3.

The camera 120-1 images the outer face of the tire 910 from the outside of the tire 910. For example, the camera 120-1 may image the tread portion and the shoulder portion of the tire 910.

The camera 120-1 corresponds to an example of a tread face camera that images the tread face of the tire.

The camera 120-2 images the side face of the tire 910 from the outside of the tire 910. For example, the camera 120-2 may image a bead portion, a sidewall portion, and a shoulder portion of the tire 910.

The camera 120-2 corresponds to an example of a side face camera that images a side face of a tire.

The camera 120-3 images the inner face of the tire 910. For example, the camera 120-3 may image a belt, a carcass, and a bead inside the tire 910.

The camera 120-3 corresponds to an example of an internal camera that images the inside of the tire.

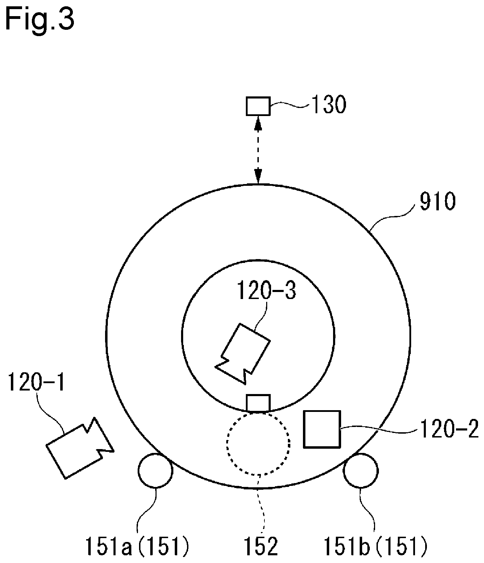

Fig. 3 is a diagram illustrating an example of arrangement of the camera 120. Fig. 3 illustrates an example of the arrangement of the camera 120 in the example of Fig. 2 when views the side face of the tire 910. Fig. 3 illustrates an example of arrangement of the distance meter 130, the roller 151, and the pusher 152. In Fig. 3, two rollers 151 are illustrated. In a case where the two rollers 151 are distinguished, they are also referred to as rollers 151a and 151b.

As described with reference to Fig. 2, the camera 120-1 images the outer face of the tire 910 from the outside of the tire 910. The camera 120-2 images the side face of the tire 910 from the outside of the tire 910. The camera 120-3 images the inner face of the tire 910.

The distance meter 130 is disposed in such a way as to face a direction orthogonal to the tread face of the tire 910, and measures a distance from the tread face of the tire 910. The outer diameter of the tire 910 can be calculated based on the distance measured by the distance meter 130. The rotation amount of the roller 151 that rotates the tire 910 can be calculated based on the outer diameter of the tire.

However, the distance meter 130 is not essential to the inspection device 1. For example, the operation control unit 160 may detect that the roller 151 has made one rotation of the tire 910 with reference to the image of the side face of the tire 910 captured by the camera 120-2.

In the example of Fig. 3, two rollers 151 support the tire 910 in a standing posture from below. However, the tire 910 may be disposed in a lateral posture.

Each of the cameras 120-1 and 120-3 may image half of the tire 910 in the width direction. In this case, when the roller 151 makes one rotation of the tire 910, the cameras 120-1, 120-2, and 120-3 capture an image (an image of the entire circumference) for one turn for half of the tire 910. When the tire 910 is disposed with the frontside and the backside reversed and the roller 151 further makes one rotation of the tire 910, the cameras 120-1, 120-2, and 120-3 can capture an image of the entire tire 910.

In this manner, by reversing the frontside and the backside of the tire 910, the entire tire 910 can be imaged using a relatively small number of cameras 120.

The frontside and the backside of the tire 910 may be reversed manually or may be reversed by the operation mechanism 150.

Alternatively, the imaging unit 100 may include six cameras, so that the camera 120 may image a half of the tire 910 imaged by the camera 120 in the examples of Figs. 2 and 3 and an opposite half at a time. In this case, when the roller 151 makes one rotation of the tire 910, it is possible to capture an image of the entire tire 910 without having to reverse the frontside and the backside of the tire 910.

Alternatively, a portion of the tire 910 may be visually inspected by a person.

For example, in the example of Figs. 2 and 3, the camera 120-3 may not be provided, and instead, the inspection operator may visually check the inside of the tire 910.

The wavelength of light imaged by the camera 120 is not limited to a specific wavelength, and can be set to various wavelengths according to the wavelength of light emitted by the lighting device 110. For example, when the lighting device 110 emits near infrared rays (NIR), and a near infrared camera may be used as the camera 120.

In a case where the imaging unit 100 includes the plurality of cameras 120, the wavelength (frequency range) of the light imaged by the camera 120 may be the same for all the cameras 120, or may be different for each camera 120.

Alternatively, a plurality of portions of the tire 910 may be imaged by moving one camera 120. For example, one camera 120 may perform imaging from the position and the orientation of the camera 120-1 in the example of Figs. 2 and 3, and the roller 151 may make one rotation of the tire 910. Next, the camera 120 may perform imaging from the position and the orientation of the camera 120-2 in the example of Figs. 2 and 3, and the roller 151 may make one rotation of the tire 910. The camera 120 then may perform imaging from the position and the orientation of the camera 120-3 in the example of Figs. 2 and 3, and the roller 151 may make one rotation of the tire 910. Furthermore, the tire 910 may be disposed with the frontside and the backside determined, and the camera 120 and the roller 151 may similarly capture an image for one turn of the tire 910 from each of the position of the camera 120-1, the position of the camera 120-2, and the position of the camera 120-3.

As described above, in a case where the camera 120 moves to perform imaging, the mechanism for moving the camera 120 is not limited to a specific mechanism. For example, the camera 120 may be attached to a robot arm (articulated arm), and the imaging control unit 140 may move the camera 120 by operating the robot arm, but the present invention is not limited thereto.

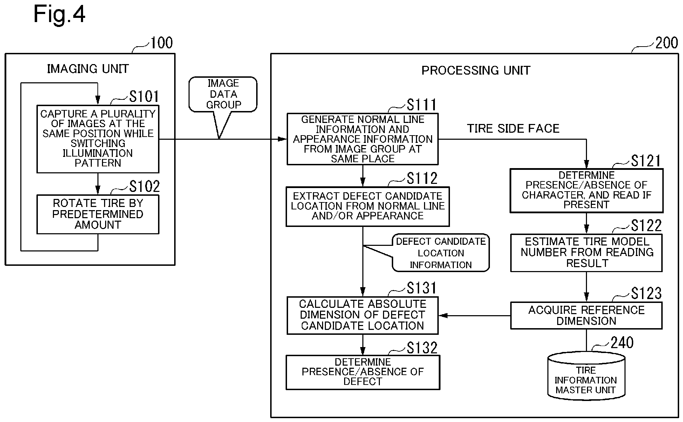

Fig. 4 is a view illustrating an example of a procedure of processing in which the inspection device 1 inspects a tire.

In the processing of Fig. 4, the camera 120 images the tire 910 (step S101). In a case where the shape recognition unit 210 uses the photometric stereo method, the lighting device 110 switches the illumination pattern in three or more patterns according to the control by the imaging control unit 140. The camera 120 images the same portion of the tire 910 for each illumination pattern according to the control by the imaging control unit 140.

Next, the roller 151 rotates the tire 910 by a predetermined amount (step S102).

After step S102, the process returns to step S101. The inspection device 1 repeats the processing of step S101 and the processing of step S102 to image each portion of the tire 910.

For example, as in the example of Fig. 2, the camera 120 may image a half of the tire 910 over the entire circumference while the roller 151 makes one rotation of the tire 910. The tire 910 then may be reversed and installed, and the camera 120 may image the remaining half of the tire 910 over the entire circumference while the roller 151 makes one rotation of the tire 910.

When the imaging of the entire tire 910 is completed, the shape recognition unit 210 generates information indicating the appearance of the tire 910 using the image data group obtained by the imaging (step S111). The information indicating the appearance of the tire 910 is information indicating at least any of the shape of the tire 910, the pattern of the tire 910, or the character illustrated on the tire 910.

For example, the shape recognition unit 210 may generate the normal line information and the contrast-enhanced image of each of the outer face, the side face, and the inner face of the tire 910 using the photometric stereo method.

The normal line information here is information indicating the shape of the tire 910 by a normal vector with respect to the surface of the tire 910. The normal line information corresponds to an example of three-dimensional shape data.

The contrast-enhanced image is an image in which contrast is enhanced from the captured image of the tire 910. The contrast-enhanced image corresponds to an example of two-dimensional image data.

Next, the shape recognition unit 210 detects a defect candidate of the tire 910 using the normal line information and the contrast-enhanced image, or any of the normal line information and the contrast-enhanced image, and calculates position information about the detected defect candidate (step S112). Information indicating a defect candidate and its position is also referred to as defect candidate location information. The shape recognition unit 210 may accumulate the defect candidate location information in a database of the defect candidate location information.

The tire information recognition unit 220 determines the presence or absence of a character on the side face of the tire 910 based on the captured image of the side face of the tire 910 or the contrast-enhanced image of the tire 910 generated by the shape recognition unit 210 in step S111, and reads the character in a case where it is determined that the character is present (step S121). The captured image or the contrast-enhanced image of the tire 910 corresponds to an example of an image of the tire 910.

The method by which the tire information recognition unit 220 reads a character from the captured image or the contrast-enhanced image on the side face of the tire 910 is not limited to a specific method. For example, the tire information recognition unit 220 may read a character using a known character recognition method, but the present invention is not limited thereto.

In a case where a character is read in step S121, the tire information recognition unit 220 estimates the model number of the tire 910 from the read result of the character (step S122).

For example, the tire information master unit 240 may store information in which the model number and the reference dimension of the tire are associated with each other using information about the name and the size notation of the tire indicated on the side face of the tire as the model number of the tire.

The tire information recognition unit 220 may extract each of the name and the size notation of the tire from the character string read in step S121.

The method by which the tire information recognition unit 220 extracts the name and the size notation of the tire from the character string is not limited to a specific method. For example, the tire information recognition unit 220 may extract a character string matching any of the names of the plurality of tires stored in the tire information master unit 240 from the character string of the read result using a known character string search method. Similarly, the tire information recognition unit 220 may extract a character string matching any of a plurality of model number notations stored in the tire information master unit 240 from the character string of the read result.

Next, the reference dimension setting unit 230 acquires information about a reference dimension associated with the name and the size notation of the tire extracted by the tire information recognition unit 220 among the information about the reference dimension of the tire stored in the tire information master unit 240 (step S123).

Next, the dimension calculation unit 250 calculates the absolute dimension of the tire 910 based on the reference dimension set by the reference dimension setting unit 230 and the information indicating the appearance of the tire 910 generated by the shape recognition unit 210 (step S131). Specifically, the dimension calculation unit 250 calculates the absolute dimension of the defect candidate detected by the shape recognition unit 210. In a case where the shape recognition unit 210 detects a plurality of defect candidates in step S112, the dimension calculation unit 250 calculates a dimension of each of the defect candidates.

Next, the determination unit 260 determines the presence or absence of a defect of the tire 910 based on the dimension of the defect candidate calculated by the dimension calculation unit 250 (step S132). For example, the determination unit 260 may compare the dimension of the defect candidate calculated by the dimension calculation unit 250 with a threshold value determined in advance for each type of defect. In a case where the dimension of the defect candidate is equal to or more than the threshold value, the determination unit 260 may determine that the defect candidate corresponds to the defect.

After step S132, the inspection device 1 ends the process of Fig. 4.

In a case where the tire information recognition unit 220 cannot estimate the model number of the tire 910 in the processing of steps S121 and S122, the dimension calculation unit 250 may calculate the absolute dimension of the tire 910 based on the information indicating the appearance without using the reference dimension in step S131.

Alternatively, the tire information recognition unit 220 may notify the user that the model number of the tire 910 cannot be estimated, and receive the input of the model number information by the user.

As described above, the shape recognition unit 210 recognizes the shape of the tire 910 from the one or more images of the tire 910, and detects a defect candidate of the tire 910.

The tire information recognition unit 220 extracts a character from the one or more images of the tire 910 and recognizes tire information including the model number of the tire.

The reference dimension setting unit 230 acquires information about a specification dimension of the tire based on the recognized model number of the tire.

The dimension calculation unit 250 calculates the dimension of the defect candidate based on the specification dimension of the tire 910 and the shape of the tire 910.

Determination unit 260 determines the presence or absence of the defect of tire 910 based on the dimension of the defect candidate.

According to the inspection device 1, it is possible to inspect the appearance of the tire without having to irradiate the tire with strip-shaped light or line shaped light.

Since it is difficult to reflect light on a black object such as a tire, it is generally difficult to perform inspection using an image captured by a camera, and inspection is performed by irradiating the tire with strip-shaped light or line shaped light. However, in a case where inspection is performed by irradiating the tire with strip-shaped light or line shaped light, an area where the tire can be irradiated with light by one radiation of light is relatively narrow, and it may take time to inspect the entire circumference of the tire. In a case where inspection is performed by irradiating the tire with strip-shaped light or line shaped light, in particular, in order to accurately measure the dimension in the feeding direction, it is necessary to strictly synchronize the moving speed of the tire surface with the scan rate of the imaging unit. For this reason, every time the size of the tire is different, it takes time and effort to reset the setting in accordance with the diameter and width of the tire.

On the other hand, the inspection device 1 can accurately extract the change in the reflected light due to the fine shape of the surface even in the object such as the tire in which the light is hardly reflected by illuminating and imaging one inspection point from a plurality of directions. Imaging by a plane instead of a band (line) enables accurate inspection even without strict synchronization with the moving speed of the tire surface.

Since tires are of various types and have various diameters and widths, it is considered that it is difficult to determine an accurate dimension only from a captured image of the tire. Even when the inspection of the tire can be automated, when the parameter value for the inspection is manually set for each type and diameter of the tire, it is a burden on the operator who performs the inspection.

On the other hand, in the inspection device 1, the tire information recognition unit 220 reads the model number from the image of the tire 910, and the reference dimension setting unit 230 acquires the information about the reference dimension associated with the model number, whereby the parameter for calculating the absolute dimension from the captured image based on the reference dimension can be automatically acquired. According to the inspection device 1, it is not necessary to manually perform setting for each type and diameter of a tire, and it is possible to relatively reduce a burden on an operator who performs inspection.

The camera 120-1 (tread face camera), the camera 120-2 (side face camera), and the camera 120-3 (internal camera) respectively image the tread face, the side face, and the inside of the tire 910.

The determination unit 260 determines the presence or absence of a defect of each of the tread face, the side face, and the inside of the tire 910.

According to the inspection device 1, inspection can be performed on each of the tread face, the side face, and the inside of the tire 910. An image captured by the camera 120-2 or an image in which contrast is enhanced from the image can be used as an image for estimating the model number of the tire.

The roller 151 rotates the tire 910 about the rotation axis of the tire 910.

Each of the camera 120-1 (tread face camera), the camera 120-2 (side face camera), and the camera 120-3 (internal camera) repeats performing imaging each time the tire 910 is rotated until the imaging is performed over the entire circumference of the tire 910.

According to the inspection device 1, the entire circumference of the tire 910 can be inspected for each of the tread face, the side face, and the inside of the tire 910.

Each of the camera 120-1 (tread face camera), the camera 120-2 (side face camera), and the camera 120-3 (internal camera) is disposed at a position and in an orientation where one region of two regions obtained by dividing the tire 910 at the center in the width direction of the tire is imaged imaging.

The roller 151 makes one rotation of the tire 910 before and after the tire 910 is disposed with the frontside and the backside reversed.

According to the inspection device 1, the entire tire 910 can be inspected.

The camera 120 is provided to be variable in position and orientation.

The roller 151 makes one rotation of the tire 910 for each position and each orientation of the camera 120.

According to the inspection device 1, a relatively wide range of the tire 910 can be inspected by one camera 120. For example, according to the inspection device 1, the entire tire 910 can be inspected by one camera 120.

The distance meter 130 is provided at a position and in an orientation where a distance to the tread face is measured from a direction perpendicular to the tread face of the tire.

The roller 151 rotates the tire 910 by a rotation amount calculated based on the distance measured by the distance meter 130 as a rotation amount of one rotation of the tire 910.

According to the inspection device 1, it is possible to prevent or reduce excess or deficiency of the rotation amount of the tire 910 for inspecting the entire circumference of the tire 910.

According to the inspection device 1, the obtained data and the position of the tire 910 can be relatively easily associated with each other in that data for one turn of the tire 910 can be obtained.

The lighting device 110 can radiate light in each of a plurality of radiation directions.

The shape recognition unit 210 generates information indicating the shape of the tire 910 by applying the photometric stereo method to images obtained by the camera 120 imaging the same portion of the tire 910 in each of the plurality of radiation directions.

According to the inspection device 1, the shape of the tire 910 can be detected with relatively high accuracy using the photometric stereo method.

The shape recognition unit 210 generates three-dimensional shape data and two-dimensional image data by the photometric stereo method.

According to the inspection device 1, the dimension calculation unit 250 can calculate the absolute dimension of the tire 910 with relatively high accuracy using the three-dimensional shape data and the two-dimensional image data obtained by the photometric stereo method. Specifically, according to the inspection device 1, it is expected that the dimension of the defect candidate can be calculated with relatively high accuracy, and the determination unit 260 can determine the presence or absence of the defect with relatively high accuracy.

### <Second example embodiment>

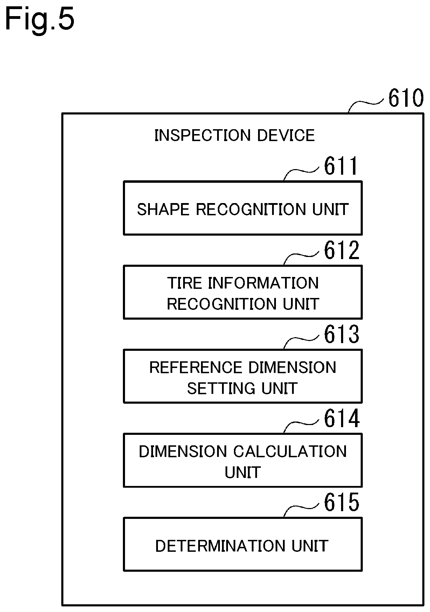

Fig. 5 is a diagram illustrating an example of a configuration of an inspection device according to at least one example embodiment. In the configuration illustrated in Fig. 5, an inspection device 610 includes a shape recognition unit 611, a tire information recognition unit 612, a reference dimension setting unit 613, a dimension calculation unit 614, and a determination unit 615.

With this configuration, the shape recognition unit 611 recognizes the shape of the tire from the one or more images of the tire and detects a defect candidate of the tire.

The tire information recognition unit 612 extracts a character from the one or more images of the tire, and recognizes tire information including the model number of the tire.

The reference dimension setting unit 613 acquires information about a specification dimension of the tire based on the recognized model number of the tire.

The dimension calculation unit 614 calculates the dimension of the defect candidate based on the specification dimension of the tire and the shape of the tire.

The determination unit 615 determines the presence or absence of a defect of the tire based on the dimension of the defect candidate.

The shape recognition unit 611 corresponds to an example of a shape recognition means. The tire information recognition unit 612 corresponds to an example of a tire information recognition means. The reference dimension setting unit 613 corresponds to an example of a reference dimension setting means. The dimension calculation unit 614 corresponds to an example of a dimension calculation means. The determination unit 615 corresponds to an example of a determination means.

According to the inspection device 610, it is possible to inspect the appearance of the tire without having to irradiate the tire with strip-shaped light or line shaped light.

Since it is difficult to reflect light on a black object such as a tire, it is generally difficult to perform inspection using an image captured by a camera, and inspection is performed by irradiating the tire with strip-shaped light or line shaped light. However, in a case where inspection is performed by irradiating the tire with strip-shaped light or line shaped light, an area where the tire can be irradiated with light by one radiation of light is relatively narrow, and it may take time to inspect the entire circumference of the tire.

On the other hand, using the information about the reference dimension (information about the dimension in the specification), the inspection device 610 can inspect the tire with relatively high accuracy using the image captured by the camera.

For example, it is expected that the dimension calculation unit 614 can calculate the dimension of the defect candidate with relatively high accuracy in calculating the dimension of the defect candidate based on the reference dimension. Since the dimension calculation unit 614 can calculate the dimension of the defect candidate with relatively high accuracy, the determination unit 615 can determine the presence or absence of the defect with relatively high accuracy.

Since tires are of various types and have various diameters, it is considered that it is difficult to determine an accurate dimension only from a captured image of the tire. Even when the inspection of the tire can be automated, when the parameter value for the inspection is manually set for each type and diameter of the tire, it is a burden on the operator who performs the inspection.

On the other hand, in the inspection device 610, the tire information recognition unit 612 reads the model number from the image of the tire, and the reference dimension setting unit 613 acquires the information about the reference dimension associated with the model number, whereby the dimension of the reference information can be automatically acquired. According to the inspection device 1, it is not necessary to manually perform setting for each type and diameter of a tire, and it is possible to relatively reduce a burden on an operator who performs inspection.

### <Third example embodiment>

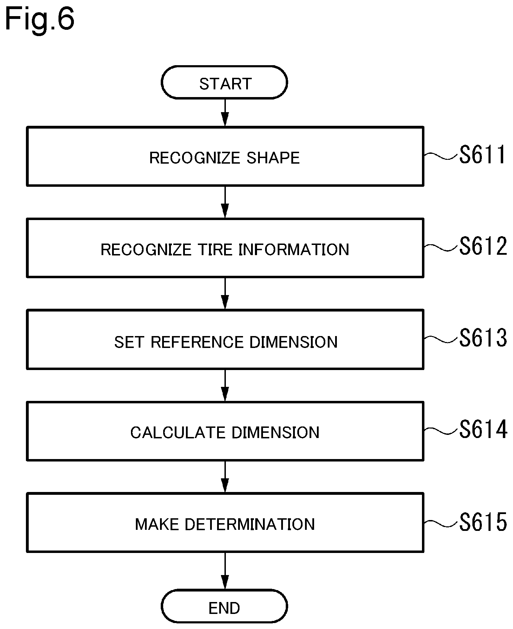

Fig. 6 is a diagram illustrating an example of a procedure of processing in the inspection method according to at least one example embodiment.

The inspection method illustrated in Fig. 6 includes recognizing a shape (step S611), recognizing tire information (step S612), setting a reference dimension (step S613), calculating a dimension (step S614), and making a determination (step S615).

**In** recognizing the shape (step S611), the computer recognizes the shape of the tire from the one or more images of the tire and detects a defect candidate of the tire.

In recognizing the tire information (step S612), the computer extracts a character from the one or more images of the tire and recognizes the tire information including the model number of the tire.

In setting the reference dimension (step S613), the computer acquires information about the specification dimension of the tire based on the recognized model number of the tire.

In calculating the dimension (step S614), the computer calculates the dimension of the defect candidate based on the specification dimension of the tire and the shape of the tire.

In performing the determination (step S615), the computer determines the presence or absence of the defect of the tire based on the dimension of the defect candidate.

According to the inspection method illustrated in Fig. 6, it is possible to inspect the appearance of the tire without having to irradiate the tire with strip-shaped light or line shaped light.

Since it is difficult to reflect light on a black object such as a tire, it is generally difficult to perform inspection using an image captured by a camera, and inspection is performed by irradiating the tire with strip-shaped light or line shaped light. However, in a case where inspection is performed by irradiating the tire with strip-shaped light or line shaped light, an area where the tire can be irradiated with light by one radiation of light is relatively narrow, and it may take time to inspect the entire circumference of the tire.

On the other hand, in the inspection method illustrated in Fig. 6, the tire inspection can be performed with relatively high accuracy using the image captured by the camera using the information about the reference dimension (information about the dimension in the specification).

For example, in calculating the dimension (step S614), it is expected that the computer can calculate the dimension of the defect candidate with relatively high accuracy in calculating the dimension of the defect candidate based on the reference dimension. Since the dimension of the defect candidate can be calculated with relatively high accuracy in calculating the dimension (step S614), in performing the determination (step S615), the computer can determine the presence or absence of the defect with relatively high accuracy.

Since tires are of various types and have various diameters, it is considered that it is difficult to determine an accurate dimension only from a captured image of the tire. Even when the inspection of the tire can be automated, when the parameter value for the inspection is manually set for each type and diameter of the tire, it is a burden on the operator who performs the inspection.

On the other hand, in the inspection method illustrated in Fig. 6, in recognizing the tire information (step S612), the computer can read the model number from the image of the tire, and in setting the reference dimension (step S613), the computer can automatically acquire the dimension of the reference information by acquiring the information about the reference dimension associated with the model number. According to the inspection method illustrated in Fig. 6, it is not necessary to manually perform setting for each type and diameter of a tire, and it is possible to relatively reduce a burden on an operator who performs inspection.

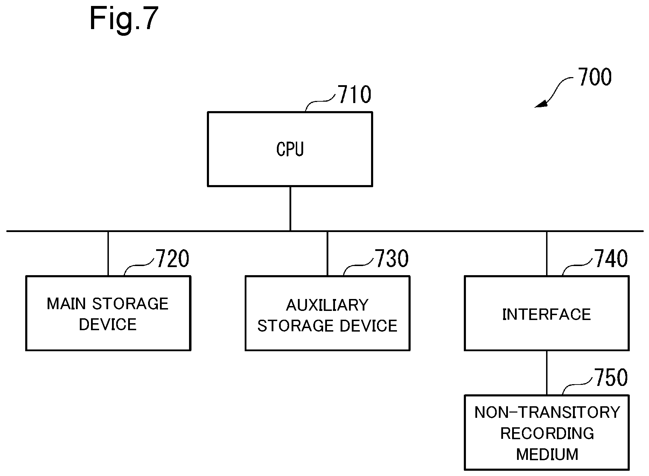

Fig. 7 is a diagram illustrating an example of a configuration of a computer according to at least one example embodiment.

In the configuration illustrated in Fig. 7, a computer 700 includes a CPU 710, a main storage device 720, an auxiliary storage device 730, an interface 740, and a non-transitory recording medium 750.

Any one or more of the inspection device 1 and the inspection device 610, or a part thereof may be mounted on the computer 700. In this case, the operation of each processing unit described above is stored in the auxiliary storage device 730 in the form of a program. The CPU 710 reads the program from the auxiliary storage device 730, develops the program in the main storage device 720, and executes the above processing according to the program. The CPU 710 secures a storage area related to each of the above-described storage units in the main storage device 720 according to the program. Communication between each device and another device is executed by the interface 740 having a communication function and performing communication under the control of the CPU 710. The interface 740 has a port for the non-transitory recording medium 750, and reads information from the non-transitory recording medium 750 and writes information to the non-transitory recording medium 750.

In a case where the inspection device 1 is mounted on the computer 700, the operations of the imaging control unit 140, the operation control unit 160, the synchronization unit 170, the shape recognition unit 210, the tire information recognition unit 220, the reference dimension setting unit 230, the dimension calculation unit 250, and the determination unit 260 are stored in the auxiliary storage device 730 in the form of a program. The CPU 710 reads the program from the auxiliary storage device 730, develops the program in the main storage device 720, and executes the above processing according to the program.

In accordance with the program, the CPU 710 secures a storage area for the inspection device 1 to perform processing, such as a storage area for the tire information master unit 240, in the main storage device 720. Communication between the inspection device 1 and another device is executed by the interface 740 having a communication function and operating under the control of the CPU 710. The interaction between the inspection device 1 and the user is executed when the interface 740 includes an input device and an output device, information is presented to the user by the output device according to the control of the CPU 710, and a user operation is received by the input device.

In a case where the inspection device 610 is mounted on the computer 700, the operations of the shape recognition unit 611, the tire information recognition unit 612, the reference dimension setting unit 613, the dimension calculation unit 614, and the determination unit 615 are stored in the auxiliary storage device 730 in the form of a program. The CPU 710 reads the program from the auxiliary storage device 730, develops the program in the main storage device 720, and executes the above processing according to the program.

The CPU 710 secures a storage area for the inspection device 610 to perform processing in the main storage device 720 according to the program. Communication between the inspection device 610 and another device is executed by the interface 740 having a communication function and operating under the control of the CPU 710.

The interaction between the inspection device 610 and the user is executed when the interface 740 has an input device and an output device, information is presented to the user by the output device according to the control of the CPU 710, and a user operation is received by the input device.

Any one or more of the above-described programs may be recorded in the non-transitory recording medium 750. In this case, the interface 740 may read the program from the non-transitory recording medium 750. The CPU 710 may directly execute the program read by the interface 740, or may temporarily store the program in the main storage device 720 or the auxiliary storage device 730 and execute the program.

A program for executing all or part of the processing performed by the inspection device 1 and the inspection device 610 may be recorded in a computer-readable recording medium, and the processing of each unit may be performed by causing a computer system to read and execute the program recorded in the recording medium. The "computer system" herein includes hardware such as an operating system (OS) and peripheral devices.

The "computer-readable recording medium" refers to a portable medium such as a flexible disk, a magneto-optical disk, a read only memory (ROM), and a compact disc read only memory (CD-ROM), and a storage device such as a hard disk built in a computer system. In addition, the program may be for implementing some of the functions described above, and the functions described above may be implemented in combination with a program already recorded in the computer system.

Although the example embodiments are described above, the specific configuration is not limited to the example embodiments, and includes design and the like within a range not departing from the gist of the present invention. The above-described example embodiments can be appropriately combined with other example embodiments.

Some or all of the above-described example embodiments may be described as the following Supplementary Notes, but are not limited to the following Supplementary Notes.

### (Supplementary Note 1)

An inspection device including
a shape recognition means for recognizing a shape of a tire from one or more images of the tire and detecting a defect candidate of the tire,
a tire information recognition means for extracting a character from the one or more images of the tire and recognizing tire information including a model number of the tire,
a reference dimension setting means for acquiring information about a specification dimension of the tire based on the recognized model number of the tire,
a dimension calculation means for calculating a dimension of the defect candidate based on the specification dimension of the tire and the shape of the tire, and
a determination means for determining presence or absence of a defect of the tire based on the dimension of the defect candidate.

### (Supplementary Note 2)

The inspection device according to Supplementary Note **1,** further including
a tread face camera, a side face camera, and an internal camera that image a tread face, a side face and an inside of the tire, respectively, wherein
the determination means determines presence or absence of a defect of each of the tread face, the side face, and the inside of the tire.

### (Supplementary Note 3)

The inspection device according to Supplementary Note 2, further including
a rotation means for rotating the tire about a rotation axis, wherein
each of the tread face camera, the side face camera, and the internal camera repeats performing imaging each time the tire is rotated until the imaging is performed over an entire circumference of the tire.

### (Supplementary Note 4)

The inspection device according to Supplementary Note 3, wherein
each of the tread face camera, the side face camera, and the internal camera is disposed at a position and in an orientation where one of two regions obtained by dividing the tire by a center in a width direction of the tire is imaged, and
the rotation means makes one rotation of the tire before and after the tire is disposed with a frontside and a backside of the tire reversed.

### (Supplementary Note 5)

The inspection device according to Supplementary Note 1, further including
a camera provided to be variable in position and orientation, and
a rotation means for making one rotation of the tire for each position and each orientation of the camera.

### (Supplementary Note 6)

The inspection device according to any one of Supplementary Notes 3 to 5, further including
a distance meter provided at a position and in an orientation where a distance to a tread face of the tire is measured from a direction perpendicular to the tread face, wherein
the rotation means rotates the tire by a rotation amount calculated based on a distance measured by the distance meter as a rotation amount of one rotation of the tire.

### (Supplementary Note 7)

The inspection device according to any one of Supplementary Note 2 to 6, further including
a lighting means for being capable of radiating light in each of a plurality of radiation directions, wherein
the shape recognition means generates information indicating a shape of the tire by applying a photometric stereo method to one or more images obtained by imaging a same portion of the tire by a camera in each of the plurality of radiation directions.

### (Supplementary Note 8)

The inspection device according to Supplementary Note 7, wherein
the shape recognition means generates three-dimensional shape data and two-dimensional image data by the photometric stereo method.

### (Supplementary Note 9)

An inspection method executed by a computer, the method including
recognizing a shape of a tire from one or more images of the tire,
detecting a defect candidate of the tire,
extracting a character from the one or more images of the tire,
recognizing tire information including a model number of the tire,
acquiring information about a specification dimension of the tire based on the recognized model number of the tire,
calculating a dimension of the defect candidate based on the specification dimension of the tire and the shape of the tire, and
determining presence or absence of a defect of the tire based on the dimension of the defect candidate.

### (Supplementary Note 10)

The inspection method executed by the computer according to Supplementary Note 9, wherein the determining includes determining presence or absence of a defect of each of the tread face, the side face, and the inside of the tire based on one or more images captured by a tread face camera, a side face camera, and an internal camera that image a tread face, a side face and an inside of the tire, respectively.

### (Supplementary Note 11)

The inspection method executed according to Supplementary Note 10, further including the computer causing each of the tread face camera, the side face camera, and the internal camera to repeat performing imaging each time the tire is rotated by a rotation means for rotating the tire about a rotation axis until the imaging is performed over an entire circumference of the tire.

### (Supplementary Note 12)

The inspection method according to Supplementary Note 11, wherein each of the tread face camera, the side face camera, and the internal camera is disposed at a position and in an orientation where one of two regions obtained by dividing the tire by a center in a width direction of the tire is imaged, the method further including
the computer causing the rotation means to make one rotation of the tire before and after the tire is disposed with a frontside and a backside of the tire reversed.

### (Supplementary Note 13)

The inspection method according to Supplementary Note 9, further including
the computer causing a rotation means to make one rotation of the tire for each position and each orientation of a camera provided to be variable in position and orientation.

### (Supplementary Note 14)

The inspection method according to any one of Supplementary Notes 11 to 13, further including
the computer
causing the rotation means to rotate the tire by a rotation amount calculated based on a distance measured by a distance meter provided at a position and in an orientation where a distance to the tread face is measured from a direction perpendicular to the tread face of the tire as a rotation amount of one rotation of the tire.

### (Supplementary Note 15)

The inspection method executed by the computer according to any one of Supplementary Notes 10 to 14, wherein the recognizing the shape of the tire from the one or more images of the tire includes generating information indicating the shape of the tire by applying a photometric stereo method to one or more images obtained by a camera imaging the same portion of the tire in each of a plurality of radiation directions by a lighting means capable of radiating light in each of the plurality of radiation directions.

### (Supplementary Note 16)

The inspection method executed by the computer according to Supplementary Note 15, wherein the recognizing the shape of the tire from the one or more images of the tire includes generating three-dimensional shape data and two-dimensional image data by the photometric stereo method.

### (Supplementary Note 17)

A program for causing a computer to execute a process of
recognizing a shape of a tire from one or more images of the tire,
detecting a defect candidate of the tire,
extracting a character from the one or more images of the tire,
recognizing tire information including a model number of the tire,
acquiring information about a specification dimension of the tire based on the recognized model number of the tire,
calculating a dimension of the defect candidate based on the specification dimension of the tire and the shape of the tire, and
determining presence or absence of a defect of the tire based on the dimension of the defect candidate.

### (Supplementary Note 18)

The program according to Supplementary Note 17, wherein
the determining includes causing the computer to execute the process of determining presence or absence of a defect of each of a tread face, a side face, and an inside of the tire based on images captured by a tread face camera, a side face camera, and an internal camera that image a tread face, a side face, and an inside of the tire, respectively.

### (Supplementary Note 19)

The program according to Supplementary Note 18, for causing the computer to execute the process of
each of the tread face camera, the side face camera, and the internal camera repeating performing imaging each time the tire is rotated by a rotation means for rotating the tire about a rotation axis until the imaging is performed over an entire circumference of the tire.

### (Supplementary Note 20)

The program according to Supplementary Note 19, wherein
each of the tread face camera, the side face camera, and the internal camera is disposed at a position and in an orientation where one of two regions obtained by dividing the tire by a center in a width direction of the tire is imaged, the program causing the computer to execute the process of
the rotation means making one rotation of the tire before and after the tire is disposed with a frontside and a backside of the tire reversed.

### (Supplementary Note 21)

The program according to Supplementary Note 20, for causing the computer to execute the process of
a rotation means making one rotation of the tire for each position and each orientation of a camera provided to be variable in position and orientation.

### (Supplementary Note 22)

The program according to any one of Supplementary Notes 19 to 21, for causing the computer to execute the process of
the rotation means rotating the tire by a rotation amount calculated based on a distance measured by a distance meter provided at a position and in an orientation where a distance to the tread face is measured from a direction perpendicular to the tread face of the tire as a rotation amount of one rotation of the tire.

### (Supplementary Note 23)

The program according to any one of Supplementary Notes 18 to 22, for causing the computer to execute the process of
in recognizing the shape of the tire from the one or more images of the tire, generating information indicating the shape of the tire by applying a photometric stereo method to one or more images obtained by a camera imaging the same portion of the tire in each of a plurality of radiation directions by a lighting means capable of radiating light in each of the plurality of radiation directions.

### (Supplementary Note 24)

The program according to Supplementary Note 23, for causing the computer to execute the process of
in recognizing the shape of the tire from the one or more images of the tire, generating three-dimensional shape data and two-dimensional image data by the photometric stereo method.

## Claims

1. An inspection device comprising:
a shape recognition means for recognizing a shape of a tire from one or more images of the tire and detecting a defect candidate of the tire;
a tire information recognition means for extracting a character from the one or more images of the tire and recognizing tire information including a model number of the tire;
a reference dimension setting means for acquiring information about a specification dimension of the tire based on the recognized model number of the tire;
a dimension calculation means for calculating a dimension of the defect candidate based on the specification dimension of the tire and the shape of the tire; and
a determination means for determining presence or absence of a defect of the tire based on the dimension of the defect candidate.

2. The inspection device according to claim 1, further comprising:
a tread face camera, a side face camera, and an internal camera that image a tread face, a side face and an inside of the tire, respectively, wherein
the determination means determines presence or absence of a defect of each of the tread face, the side face, and the inside of the tire.

3. The inspection device according to claim 2, further comprising:
a rotation means for rotating the tire about a rotation axis, wherein
each of the tread face camera, the side face camera, and the internal camera repeats performing imaging each time the tire is rotated until the imaging is performed over an entire circumference of the tire.

4. The inspection device according to claim 3, wherein
each of the tread face camera, the side face camera, and the internal camera is disposed at a position and in an orientation where one of two regions obtained by dividing the tire by a center in a width direction of the tire is imaged, and
the rotation means makes one rotation of the tire before and after the tire is disposed with a frontside and a backside of the tire reversed.

5. The inspection device according to claim 1, further comprising:
a camera provided to be variable in position and orientation; and
a rotation means for making one rotation of the tire for each position and each orientation of the camera.

6. The inspection device according to any one of claims 3 to 5, further comprising:
a distance meter provided at a position and in an orientation where a distance to a tread face of the tire is measured from a direction perpendicular to the tread face, wherein
the rotation means rotates the tire by a rotation amount calculated based on a distance measured by the distance meter as a rotation amount of one rotation of the tire.

7. The inspection device according to any one of claims 2 to 6, further comprising:
a lighting means for being capable of radiating light in each of a plurality of radiation directions, wherein
the shape recognition means generates information indicating a shape of the tire by applying a photometric stereo method to one or more images obtained by imaging a same portion of the tire by a camera in each of the plurality of radiation directions.

8. The inspection device according to claim 7, wherein
the shape recognition means generates three-dimensional shape data and two-dimensional image data by the photometric stereo method.

9. An inspection method executed by a computer, the method comprising:
recognizing a shape of a tire from one or more images of the tire,
detecting a defect candidate of the tire;
extracting a character from the one or more images of the tire,
recognizing tire information including a model number of the tire;
acquiring information about a specification dimension of the tire based on the recognized model number of the tire;
calculating a dimension of the defect candidate based on the specification dimension of the tire and the shape of the tire; and
determining presence or absence of a defect of the tire based on the dimension of the defect candidate.

10. The inspection method according to claim 9, wherein
the determining includes determining presence or absence of a defect of each of the tread face, the side face, and the inside of the tire based on one or more images captured by a tread face camera, a side face camera, and an internal camera that image a tread face, a side face and an inside of the tire, respectively.

11. The inspection method according to claim 10, further comprising:
the computer causing each of the tread face camera, the side face camera, and the internal camera to repeat performing imaging each time the tire is rotated by a rotation means for rotating the tire about a rotation axis until the imaging is performed over an entire circumference of the tire.

12. The inspection method according to claim 11, wherein
each of the tread face camera, the side face camera, and the internal camera is disposed at a position and in an orientation where one of two regions obtained by dividing the tire by a center in a width direction of the tire is imaged, the method further comprising:
the computer causing the rotation means to make one rotation of the tire before and after the tire is disposed with a frontside and a backside of the tire reversed.

13. The inspection method according to claim 9, further comprising:
the computer causing a rotation means to make one rotation of the tire for each position and each orientation of a camera provided to be variable in position and orientation.

14. The inspection method according to any one of claims 11 to 13, further comprising:
the computer
causing the rotation means to rotate the tire by a rotation amount calculated based on a distance measured by a distance meter provided at a position and in an orientation where a distance to the tread face is measured from a direction perpendicular to the tread face of the tire as a rotation amount of one rotation of the tire.

15. A program for causing a computer to execute the method as claimed in any of claims 9 to 14.
